Europäisches Patentamt

European Patent Office

Office européen des brevets

(19)

(11) **EP 1 007 939 B1**

(12) **EUROPÄISCHE PATENTSCHRIFT**

(45) Veröffentlichungstag und Bekanntmachung des
Hinweises auf die Patenterteilung:
**11.09.2002  Patentblatt 2002/37**

(21) Anmeldenummer: **97929285.1**

(22) Anmeldetag: **25.06.1997**

(51) Int Cl.[7]: **G01N 3/28**

(86) Internationale Anmeldenummer:
**PCT/EP97/03324**

(87) Internationale Veröffentlichungsnummer:
**WO 98/000699 (08.01.1998 Gazette 1998/01)**

(54) **MESSVERFAHREN ZUR ERMITTLUNG DES ZWEIACHSIGEN UMFORMVERHALTENS
METALLISCHER WERKSTOFFE, INSBESONDERE BLECH**

MEASUREMENT PROCESS FOR DETERMINING THE BIAXIAL DEFORMATION BEHAVIOR OF
METAL MATERIALS, PARTICULARLY SHEET METAL

PROCEDE DE MESURE POUR LA DETERMINATION DU COMPORTEMENT A LA DEFORMATION
DE MATERIAUX METALLIQUES, EN PARTICULIER D'UNE TOLE

(84) Benannte Vertragsstaaten:
**AT DE FR GB NL**

(30) Priorität: **29.06.1996  DE 19626242**

(43) Veröffentlichungstag der Anmeldung:
**14.06.2000  Patentblatt 2000/24**

(73) Patentinhaber: **ThyssenKrupp Stahl AG
47166 Duisburg (DE)**

(72) Erfinder:
 • **BLÜMEL, Klaus
   D-46537 Dinslaken (DE)**
 • **GERLACH, Jörg
   D-47137 Duisburg (DE)**

(74) Vertreter: **Knauf, Rudolf, Dipl.-Ing.
Cohausz & Florack,
Kanzlerstrasse 8a
40472 Düsseldorf (DE)**

(56) Entgegenhaltungen:
**DE-A- 3 617 455        DE-C- 527 122
DE-C- 3 914 966**

• **LAUKONIS J V: "Anisotropic strain localization
in tensile prestrained sheet steel"
METALLURGICAL TRANSACTIONS A
(PHYSICAL METALLURGY AND MATERIALS
SCIENCE), MARCH 1981, USA, Bd. 12A, Nr. 3,
ISSN 0360-2133, Seiten 467-472, XP002042160**
• **SOVIET INVENTIONS ILLUSTRATED Week 8831
7.Juli 1988 Derwent Publications Ltd., London,
GB; AN 219341 XP002042162 & SU 1 368 073 A
(ROSTELSMASH WK) , 23.Januar 1988**
• **GLAZKOV V I ET AL: "Calculated determination
of the elongation and reduction of flat samples"
INDUSTRIAL LABORATORY, FEB. 1980, US, Bd.
46, Nr. 2, ISSN 0019-8447, Seiten 179-181,
XP002042161**
• **SOVIET INVENTIONS ILLUSTRATED Week 8248
19.Januar 1983 Derwent Publications Ltd.,
London, GB; AN A5666J XP002042163 & SU 902
919 A (URAL FERROUS METAL RES) , 7.Februar
1982**

EP 1 007 939 B1

**Beschreibung**

Schon lange besteht ein Bedürfnis dafür, das Umformverhalten metallischer Werkstoffe, insbesondere Blech, für verschiedene Umformarten und Umformgrade umfassend zu beschreiben. Gelänge eine solche umfassende Beschreibung schon durch den Hersteller der Werkstoffe, dann könnte der Weiterverarbeiter auf einfache Art und Weise den für den jeweiligen Umformvorgang am besten geeigneten Werkstoff aussuchen. Eine umfassende Beschreibung des Umformverhaltens eines Werkstoffes ist auch Voraussetzung für den Einsatz von numerischen Verfahren in der Umformtechnik bei Hersnellbarkeitsuntersuchungen und für die Simulation des Umformvorgangs. Damit die Auswahl geeigneter Werkstoffe, aber auch selche numerischen Verfahren und Simulationen zu zuverlässigen Ergebnissen führen, muß das Umformverhalten durch Versuche vollständig abgesichert sein und darf auch nicht teilweise auf Hypothesen basieren.

Die Vorhersage des Werkstoffverhaltens beim Umformen von Blechen in Umformwerkzeugen ist deshalb besonders schwierig, weil sich in den Verformungszonen Spannungszustände einstellen, die das Resultat sich überlagernder unterschiedlicher Belastungen, wie Zug-, Druck- und Biegespannungen, sind. Beim idealisierten reinen Tiefziehen wird dem Material nur erlaubt, vom Rand eines scheibenförmigen Werkstückes, der Fachmann spricht von Ronde, zur Mitte nachzufließen, ohne daß die Mitte selbst umgeformt wird. Beim idealen Streckziehen wird das Nachfließen des Materials vom Rand der Ronde nicht erlaubt, so daß die gesamte Verformung ausschließlich im Mittenbereich stattfindet. In der Praxis gibt es das idealisierte Tiefziehen und Streckziehen nicht, sondern das Tiefziehen und Streckziehen überlagern einander. Bei überwiegend durch Tiefziehen hergestellten Werkstücken spricht man von Tiefziehteilen, während man bei überwiegend durch Streckziehen hergestellten Werkstücken von Streckziehteilen spricht. Im Fahrzeugbau sind Tiefziehteile, zum Beispiel Halbschalen für Ölwannen und Kraftstofftanks, Türinnenteile und Radhäuser, während Motorhauben, Türen, Dächer, Klappen und Deckel Streckziehteile sind.

Alle bisher bekannten Methoden, das Werkstoffverhalten bei unterschiedlichen Verformungsgraden unter Kombinaticn von verschiedenen Belastungen, wie sie bei realen Streckzieh-oder Tiefziehteilen auftreten, vorherzusagen, versagen.

Bekannt ist die experimentelle Erfassung des zweiachsigen Werkstoffverhaltens von Blechen unter variabler Zugbeanspruchung (DE 39 14 966 C1; WO 90/13804). Bei diesem bekannten Meßverfahren werden in ebenen Proben über kreuzförmig daran angeschlossene überlange, längsgeschlitzte Probearme die Zugkräfte für die Prüfung eingebracht, die zu einer homogenen plastischen Verformung des das eigentliche Meßgebiet bildenden Mittenbereichs der Probe führen. Nur durch sehr aufwendige konstruktive Maßnahmen an den angeschlossenen Probearmen läßt sich aber an einer solchen Probe eine homogene Spannungsverteilung im Meßgebiet erreichen, die Voraussetzung für eindeutige Meßergebnisse ist. Neben diesem Nachteil besteht ein weiterer Nachteil darin, daß bei diesem Meßverfahren nur eine Aussage über das Fließverhalten in zwei Achsrichtungen unter Zugspannung erhalten wird. Eine Aussage über das Fließverhalten unter Druck läßt sich nicht erhalten, weil bei Beaufschlagung mit Druck die überlangen, längsgeschlitzten Probearme ausknicken würden.

Ferner ist die experimentelle Erfassung des zweiachsigen Umformverhaltens von Blechen bekannt (J.V. Laukonis, Metallurgical Trans A, Band 12A (März 1981), Seiten 467-472), bei dem zunächst in einer Primärprobe durch Zugbeanspruchung ein Gebiet nahezu homogener Verformung erzeugt wird. Aus diesem Gebiet der nahezu homogenen Verformung der Primarprobe werden mehrere Sekundärproben mit verschiedener Orientierung zur Achse der Zugbeanspruchung entnommen. An diesen Sekundärproben wird bei einachsiger Zugbeanspruchung die Zugfließgrenze ermittelt. Wie mit dem vorigen Verfahren erlaubt auch dieses Verfahren nur eine Aussage über das Fließverhalten in zwei Achsrichtungen unter Zugspannung.

Mit einer anderen bekannten Meßapparatur zur zweiachsigen statischen und/oder dynamischen Zugbelastung von flächenhaften quadratischen Metallproben soll auch eine Druckbelastung durchführbar sein (DE 36 17 455 A1). Dazu ist vorgesehen, daß unmittelbar an den vier Seiten der Metallprobe Krafteinleitungselemente angeschlossen sind. Es ist fraglich, ob es bei einer damit eingeleiteten Zugbelastung zu einer homogenen plastischen Verformung im das eigentliche Meßgebiet bildenden Mittenbereich der Probe kommt. Eine Untersuchung des Umformverhaltens von dünnen Blechwerkstoffen in der Kombination von Zug- und Druckspannungen erscheint unmöglich, weil die flächenhaften Materialproben instabil sind und bereits bei geringen Druckkräften ausknicken.

Der Erfindung liegt die Aufgabe zugrunde, ein einfach durchzuführendes Meßverfahren zur Ermittlung des zweiachsigen Umformverhaltens metallischer Werkstoffe insbesondere unter Kombination von Zug- und Druckspannungen zu entwickeln. Mit dem ermittelten Umformverhalten soll es vor allem möglich sein, eine neue Beschreibungsmöglichkeit für typische Beanspruchungsarten, wie Tiefziehfähigkeit oder Streckziehfähigkeit, der dem Anwender zur Verfügung gestellten Werkstoffe zu geben.

Diese Aufgabe wird erfindungsgemäß durch folgende Verfahrensschritte gelöst:

a) In einer Primärprobe wird mindestens durch einachsige Zugbeanspruchung ein Gebiet nahezu homogener Verformung erzeugt.

b) Aus dem Gebiet der homogenen Verformung der Primärprobe werden mehrere Sekundärproben mit verschiedener Orientierung zur Achse der Zugbeanspruchung entnommen.

c) An den Sekundärproben wird bei einachsiger Zug- und Druckbelastung die Zug- und die Druckfließgrenze ermittelt.

d) An mindestens einer Sekundärprobe wird das Verhältnis von plastischer Längs- und Querdehnung an der Zugund/oder Druckfließgrenze ermittelt.

e) Mit den ermittelten Fließgrenzen und dem an der Zug- und/oder Druckfließgrenze ermittelten Verhältnis werden die Parameter einer mindestens näherungsweise elliptischen Fließortkurve bestimmt, die das Umformverhalten des Werkstoffes beschreibt.

Der für das erfindungsgemäße Meßverfahren zu treibende Aufwand ist im Vergleich zu anderen dadurch erheblich reduziert, daß von einem nur nahezu homogenen Verformungsgebiet ausgegangen wird, aus dem die Sekundärproben für die Ermittlung der Parameter der elliptischen Fließortkurve entnommen werden. Die Ermittlung von fünf Parametern reicht bekanntlich aus, um eine Ellipse als Ort der Fließgrenze in allen vier Quadranten des Zug-Druckfeldes zu definieren. Diese Fließortkurve gibt dem Weiterverarbeiter das Arbeitsmittel in die Hand, das er für die Auswahl des geeigneten Werkstoffes für den jeweiligen Umformvorgang braucht beziehungsweise das für rechnerische Herstellbarkeitsuntersuchungen und Simulationen des Umformverhaltens benötigt wird.

Vorzugsweise wird die Primärprobe bei der Zugbelastung gleichzeitig quer zur Zugbelastung durch Stauchung auch druckbeansprucht. Dabei wird in dem Gebiet nahezu homogener Verformung der Grad der Druckbeanspruchung (Stauchung) konstant genalten. Die Zugbelastung und die gleichzeitige Stauchung lassen sich in an sich bekannter Weise in einem Keilzugversuch auf bewährte Art und Weise verwirklichen. Dabei sollten vorzugsweise in Abwandlung des bekannten Keilzugversuchs statt starrer Seitenbacken (DE-PS 527 122) großdimensionierte Rollen eingesetzt werden, bei denen eine für eine homogene Verformung nachteilige Kantenreibung der Primärprobe praktisch nicht auftritt. Mit der Vorrichtung für die Keilzugprobe läßt sich der konstante Stauchgrad in der Weise leicht verwirklichen, daß der Werkstoff im Bereich der späteren homogenen Verformung eine konstante Ursprungsbreite hat.

Das Interesse des Weiterverarbeiters des Werkstoffes am Umformverhalten des Werkstoffes bei unterschiedlichen Verformungsgraden kann nach der Erfindung dadurch befriedigt werden, daß mehrere Primärproben eines Werkstoffes verschieden starken Vorverformungen (Stauchgraden) unterworfen werden. Die so erhaltenen verschiedenen elliptischen Fließortkurven liefern dem Fachmann dann eine Aussage darüber, wie der Werkstoff sich bei unterschiedlichen Verformungsgraden verhält.

Bei der möglichst exakten Bestimmung der Fließortkurven hat sich bewährt, wenn anstelle der üblichen Fließgrenze, die bei 0,2 % plastischer Dehnung liegt, auch Dehngrenze genannt, eine Fließgrenze von 0,02 % verwendet wird, die nahe bei der technischen Dehngrenze (0,01 %) liegt. Diese wesentlich niedrigere Dehngrenze erlaubt auch den Einsatz von verhältnismäßig dünnen Blechen, bei denen die Gefahr, daß sie bei der Bestimmung der Druckfließgrenze leicht ausknicken, gemindert wird.

Im folgenden wird die Erfindung anhand einer ein Ausführungsbeispiel darstellenden Zeichnung näher erläutert . Im einzelnen zeigen:

Fig. 1    eine Primärprobe in Form eines Blechstreifens mit einem Keilwinkel $\alpha_K = 2°$ und einem Abschnitt konstanter Breite,

Fig. 2    einen Keilzugversuch mit einer Primärprobe in schematischer Darstellung,

Fig. 3    eine Sekundärprobe in Aufsicht,

Fig. 4    elliptische Fließortkurven eines Werkstoffes, dessen Primärproben im Keilzugversuch mit verschiedenen Stauchgraden gestaucht wurden,

Fig. 5    eine charakteristische elliptische Fließortkurve mit sie bestimmenden Elementen,

Fig. 6    charakteristische Fließortkurven von drei verschiedenen Werkstoffen, deren Primärproben mit zwei verschiedenen Stauchgraden vorverformt wurden,

Fig. 7    verschiedene Fließortkurven mit einem Halbachsenverhältnis a/b < 1,8 eines Streckziehstahls, dessen Primärproben im Keilzugversuch mit verschiedenen Stauchgraden gestaucht wurden
und

Fig. 8    verschiedene Fließortkurven mit einem Halbachsenverhältnis a/b > 2 eines weichen Tiefziehstahls, dessen Primärproben im Keilzugversuch mit verschiedenen Stauchgraden gestaucht wurden.

Ein als Primärprobe für einen Keilzugversuch vorbereitetes Blech mit einer Dicke von 0,7 bis 3,5 mm besteht aus einem schlanken Keilabschnitt 1 mit einem Keilwinkel $\alpha_k = 2°$ und einem Abschnitt 2 konstanter Breite. Der Abschnitt 2 konstanter Breite umfaßt nach dem Keilzugversuch das Gebiet nahezu homogener Verformung.

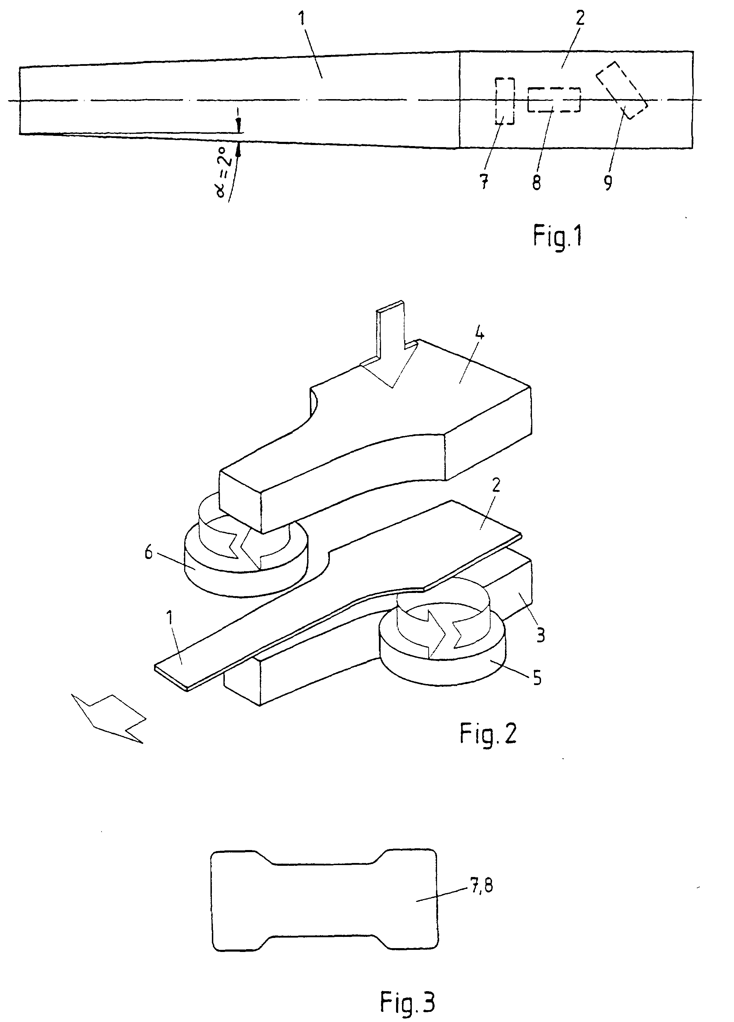

Beim Keilzugversuch gemäß Fig. 2 wird die Primärprobe an ihren Breitseiten von Führungsplatten 3,4 abgestützt. Auf die Schmalseiten der Primärprobe wirken großdimensionierte Rollen 5,6 ein, die für verschiedene Keilzugversuche entweder bei Primärproben gleicher Dimensionierung auf unterschiedlichen Abstand einstellbar sind oder bei Primärproben mit verschieden breiten Abschnitten 2 auf konstanten Rollenabstand eingestellt sind, um in jedem Fall beim Durchziehen der Primärprobe im Abschnitt 2 konstanter Breite unterschiedliche Stauchgrade zu erzielen.

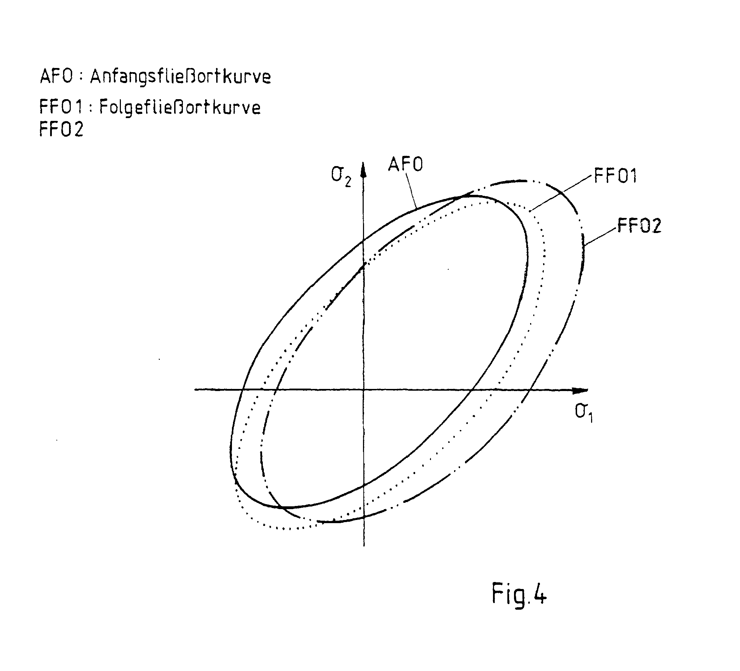

Nach dem Keilzugversuch werden der Primärprobe Sekundärproben 7,8 gleicher Größe, aber unterschiedlicher Orientierung entnommen, wie in Fig. 1 angedeutet ist. Die Sekundärprobe 7 liegt mit ihrer Achse quer zur Achse der Primärprobe 1, während die Sekundärprobe 8 mit ihrer Achse parallel zur Achse der Primärprobe 1 liegt. Die besondere Form der einzelnen Sekundärproben 7,8 kann Fig. 3 entnommen werden. Insgesamt werden mindestens zwei Sekundärproben entnommen, und zwar eine Probe 7 und eine Probe 8. Die Proben 7 und 8 werden je einer einachsigen Zugbelastung und einer einachsigen Druckbelastung unterworfen. Die dabei ermittelten Fließgrenzen $\sigma_1$, $-\sigma_1$, $\sigma_2$ und $-\sigma_2$ bei einer plastischen Dehnung von 0,02 % sind die geometrischen Orte der elliptischen Fließortkurve auf den Achsen des Spannungsraumes (Hauptspannungsebene). In Fig. 4 sind diese Punkte einer ausgezeichneten Fließortkurve eines Werkstoffes dargestellt. Allein die Punkte $\sigma_1$,$-\sigma_1$, $\sigma_2$ und $-\sigma_2$ reichen zur Bestimmung der elliptischen Fließortkurve noch nicht aus. Zur vollständigen Bestimmung der elliptischen Fließortkurve wird deshalb noch ein weiterer Meßwert, zum Beispiel die Steigung der Tangente an die elliptische Fließortkurve im Schnittpunkt mit einer der Achsen $\sigma_1$, $\sigma_2$ benötigt. Die Ermittlung dieser Steigung erfolgt in der Weise, daß an mindestens einer Sekundärprobe das Verhältnis von plastischer Längs- und Querdehnung an der Zug- und/oder Druckfließgrenze bestimmt wird.

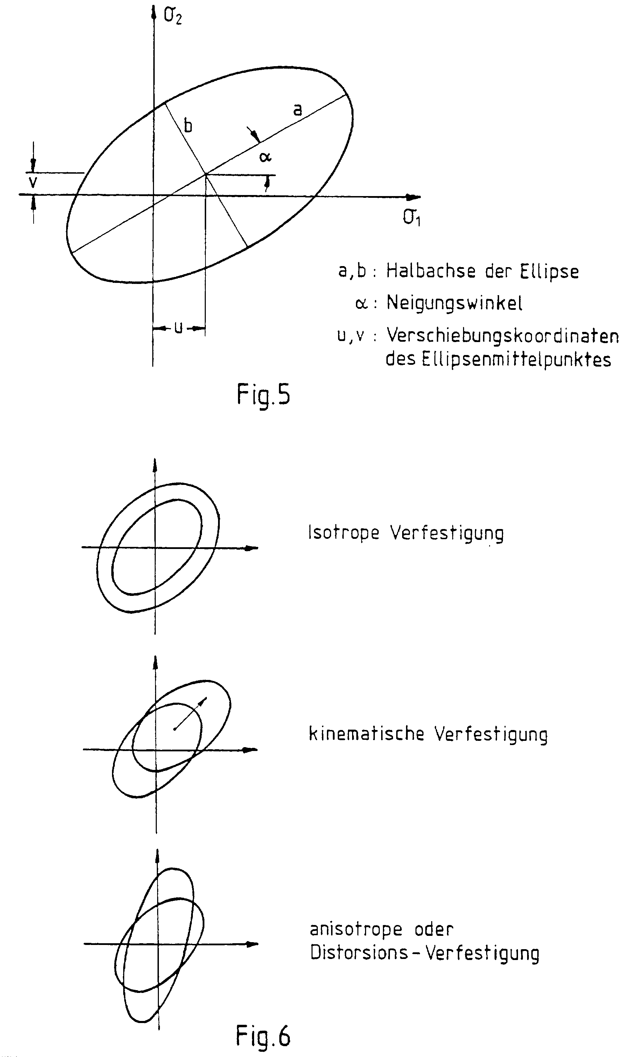

Damit ist dann die elliptische Fließortkurve mit ihren Achsen a,b, ihrer Mittelpunktsverschiebung u,v und ihrem Neigungswinkel $\alpha$ eindeutig umschrieben, wie in Fig. 5 dargestellt ist.

In Fig. 4 sind neben der ausgezeichneten elliptischen Fließortkurve weitere Fließortkurven FF01,FF02 dargestellt. Diese Fließortkurven FF01 und FF02 sind verschiedenen Primärproben desselben Werkstoffes zugeordnet, die aber verschiedenen Verformungsgraden (Stauchgraden) unterworfen wurden. Durch den Vergleich dieser Fließortkurven lassen sich Aussagen über das Verformungsverhalten des Werkstoffes machen:

So zeigt Fig. 6 entsprechend Fig. 4 für verschiedene Werkstoffe elliptische Fließortkurven bei verschiedenen Verformungsgraden. Dabei wird unterschieden zwischen isotroper Verfestigung (allseitige Aufweitung der Fließfläche), kinematischer Verfestigung (Starrkörperbewegung der Fließfläche) und Distorsionsverfestigung (Änderung der Neigung und/oder Veränderung des Halbachsenverhältnisses).

Es wurde gefunden, daß für das Streckziehen Werkstoffe mit nur sehr kleinen Mittelpunktsverschiebungen in positiver oder negativer Richtung im Lieferzustand

$$\frac{u}{R_{p0,02}}, \frac{v}{R_{p0,02}} < 20\%$$

bei einem Halbachsenverhältnis a/b < 1,85 am besten geeignet sind.

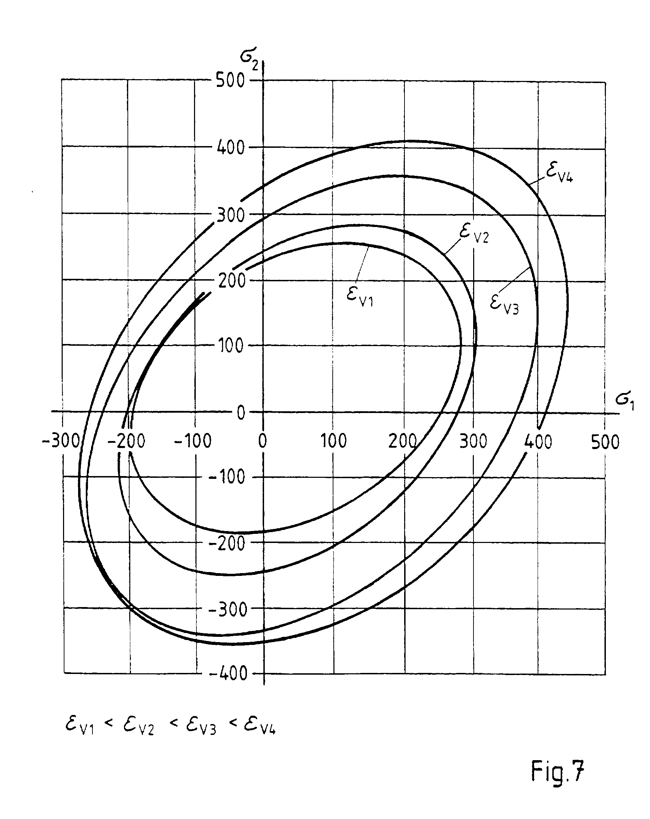

Fig. 7 zeigt elliptische Fließortkurven eines Werkstoffes für Streckziehteile, also Teile, die bei der Verformung überwiegend einer Streckziehbeanspruchung unterworfen werden. Bei den Parametern $\varepsilon_{V1}$, $\varepsilon_{V2}$, $\varepsilon_{V3}$, $\varepsilon_{V4}$ für die verschiedenen Fließortkurven handelt es sich um die plastische Vergleichsdehnung bei verschiedenen Verformungszuständen (Stauchgraden) der Primärproben 1-4. Unter Berücksichtigung der Volmenkonstante bei der plastischen Umformung ist die Vergleichsdehnung folgendermaßen definiert:

$$\varepsilon_v = \sqrt{\frac{4}{3}(\varepsilon_{1plast}^2 + \varepsilon_{1plast}\,\varepsilon_{2plast} + \varepsilon_{2plast}^2)}$$

Dabei sind $\varepsilon_{1plast}$ wahre plastische Dehnung, ermittelt aus der Verlängerung des homogenen Bereichs der Primärprobe, $\varepsilon_{2plast}$ wahre plastische Dehnung, ermittelt aus der Stauchung des homogenen Bereichs der Primärprobe.

Weiter wurde gefunden, daß für Tlefziehprozesse Werkstoffe mit einem Halbachsenverhältnis a/b > 2 besonders gut geeignet sind. Die positive Eignung wird noch verstärkt, wenn die vorgenannten Mittelpunktsverschiebungen > 20% sind.

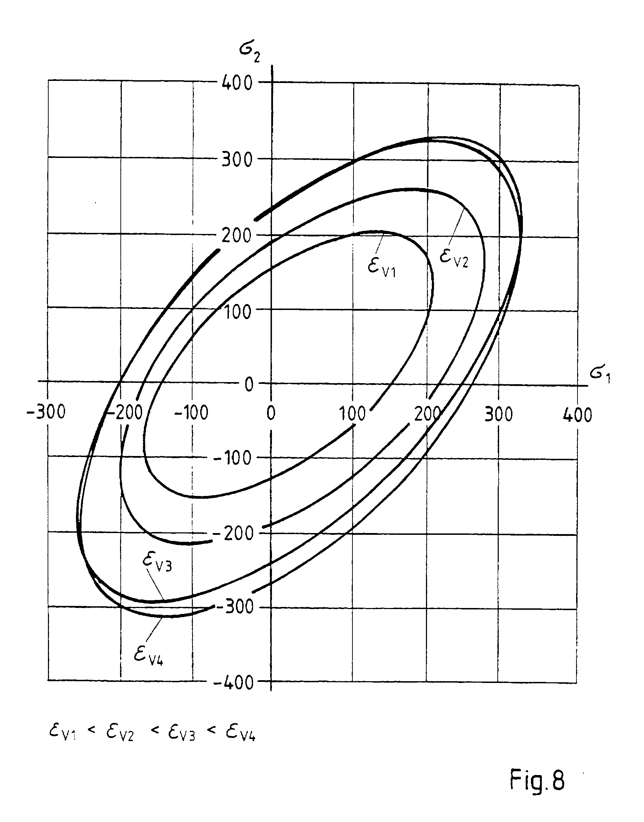

So zeigt Fig. 8 die Fließortkurven eines Werkstoffes, der für Tiefziehteile geeignet ist, also für solche Teile, die bei der Verformung überwiegend einer Tiefziehbanspruchung unterworfen werden. Die Parameter $\varepsilon_{V1}$, $\varepsilon_{V2}$, $\varepsilon_{V3}$, $\varepsilon_{V4}$, repräsentieren die plastische Vergleichsdehnung, wie ober. beschrieben.

Ferner wurde gefunden, daß für Biegevorgänge Werkstoffe mit einer elliptischen Fließortkurve gut geeignet sind, deren Mittelpunktsverschiebung in beiden Achsen in negativer Richtung > 20% ist. Schließlich wurde gefunden, daß der Neigungswinkel $\alpha$ der elliptischen Fließortkurven sich weniger auf die drei vorgenannten Umformeignungen auswirkt, sondern nur die Materialvorzugsrichtung unterstützt.

## Patentansprüche

1. Meßverfahren zur Ermittlung des zweiachsigen Umformverhaltens metallischer Werkstoffe, insbesondere Blech, mit folgenden Verfahrensschritten:

   a) In einer Primärprobe wird mindestens durch Zugbeanspruchung ein Gebiet nahezu homogener Verformung erzeugt.

   b) Aus dem Gebiet der nahezu homogenen Verformung der Primärprobe werden mehrere Sekundärproben mit verschiedener Orientierung zur Achse der Zugbeanspruchung entnommen.

   c) An den Sekundarproben wird bei einachsiger Zug- und Druckbelastung die Zug- und Druckfließgrenze ermittelt.

   d) An mindestens einer Sekundärprobe wird das Verhältnis von plastischer Längs- und Querdehnung an der Zug- und/oder Druckfließgrenze ermittelt.

   e) Mit den ermittelten Fließgrenzen und dem an der Zug- und/oder Druckfließgrenze ermittelten Verhältnis werden die Parameter einer mindestens näherungsweise elliptischen Fließortkurve bestimmt, die das Umformverhalten des Werkstoffes beschreibt.

2. Meßverfahren nach Anspruch 1, **dadurch gekennzeichnet, daß** die Primärprobe bei der Zugbelastung gleichzeitig quer zur Zugbelastung gestaucht wird.

3. Meßverfahren nach Anspruch 1, **dadurch gekennzeichnet, daß** im Gebiet nahezu homogener Verformung der Grad der Stauchung konstant gehalten wird.

4. Meßverfahren nach Anspruch 1 bis 3, **dadurch gekennzeichnet, daß** die Zugbelastung mit gleichzeitiger Stauchung in einem Keilzugversuch erfolgt.

5. Meßverfahren nach einem der Ansprüche 2 bis 4, **dadurch gekennzeichnet, daß** Fließortkurven von mehreren Primärproben desselben Werkstoffes ermittelt werden, die jeweils verschiedenen Verformungsgraden unterworfen wurden.

6. Meßverfahren nach einem der Ansprüche 1 bis 5, **dadurch gekennzeichnet, daß** als Fließgrenzen die Werte bei einer plastischen Dehnung von 0,02 % verwendet werden.

## Claims

1. A measuring process for determining the biaxial shaping behaviour of metallic materials, more particularly sheet metal, having the following method steps:

   a) An area of practically homogenous deformation is produced in a primary sample at least by tensile stressing.

   b) A number of secondary samples with different orientation to the axis of tensile stressing are taken from the area of practically homogenous deformation of the primary sample.

   c) The tensile and compressive flow limits are determined in the secondary samples under uniaxial tensile and compressive loading.

   d) The relationship of plastic longitudinal and transverse expansion is determined at the tensile and/or compressive flow limit in at least one secondary sample.

   e) The parameters of an at least approximately elliptical flow locus curve describing the shaping behaviour of the material are determined using the flow limits determined and the relationship determined at the tensile and/or compressive flow limit.

2. A measuring method according to claim 1, **characterised in that** during tensile loading the primary sample is simultaneously upset transversely of the tensile loading.

3. A measuring method according to claim 2, **characterised in that** the degree of upsetting is kept constant in the area of practically homogenous deformation.

4. A measuring method according to one of claims 1 to 3, **characterised in that** tensile loading takes place simultaneously with upsetting in a wedge-draw test.

5. A measuring method according to one of claims 2 to 4, **characterised in that** flow locus curves are determined for a number of primary samples of the same material, which are each subjected to different degrees of deformation.

6. A measuring method according to one of claims 1 to 5, **characterised in that** the values with a plastic elongation of 0.02% are used as flow limits.

**Revendications**

1. Procédé de mesure pour obtenir le comportement en déformation bi-axiale de matériaux métalliques, notamment de tôle, ayant les étapes de procédé suivantes :

   a) dans une éprouvette primaire on obtient, au moins par effort de traction, un domaine de déformation à peu près homogène,
   b) dans le domaine de déformation à peu près homogène de l'éprouvette primaire, on réalise plusieurs éprouvettes secondaires avec différentes orientations par rapport à l'axe de l'effort de traction,
   c) on obtient, sur les éprouvettes secondaires, la limite d'écoulement plastique en traction et en compression par sollicitation uni-axiale en traction et en compression,
   d) sur au moins une éprouvette secondair, on obtient la proportion des extensions longitudinale et transversale à la limite d'écoulement plastique en traction et/ou en extension,
   e) avec les limites d'écoulement obtenues et avec la proportion obtenue à la limite d'écoulement en traction et/ou en compression, on détermine les paramètres d'une courbe lieu géométrique d'écoulement au moins approximativement elliptique qui décrit le comportement en déformation du matériau.

2. Procédé de mesure selon la revendication 1, **caractérisé en ce que** pendant la sollicitation en traction, on sollicite simultanément l'échantillon primaire en refoulement perpendiculairement à l'effort de traction.

3. Procédé de mesure selon la revendication 1, **caractérisé en ce que** dans le domaine de déformation à peu près homogène, on garde constant le degré de sollicitation en refoulement.

4. Procédé de mesure selon l'une des revendications 1 à 3 **caractérisé en ce que** l'effort de traction avec contrainte de refoulement simultané est effectué dans un essai de traction avec coinçage.

5. Procédé de mesure selon l'une des revendications 2 à 4, **caractérisé en ce que** l'on obtient des courbes lieu géométrique d'écoulement de plusieurs éprouvettes primaires du même matériau, qui ont été soumises à des degrés divers de déformation.

6. Procédé de mesure selon l'une des revendications 1 à 5, **caractérisé en ce que** l'on utilise comme limite d'écoulement les valeurs lors d'un étirement plastique de 0,02%.

1

2

7    8    9

α = 2°

Fig.1

4

6

2

1

3

5

Fig. 2

7,8

Fig.3

AFO : Anfangsfließortkurve

FFO1 : Folgefließortkurve
FFO2

Fig. 4

a,b : Halbachse der Ellipse

α : Neigungswinkel

u,v : Verschiebungskoordinaten des Ellipsenmittelpunktes

Fig.5

Isotrope Verfestigung

kinematische Verfestigung

anisotrope oder Distorsions-Verfestigung

Fig.6

$\mathcal{E}_{V1} < \mathcal{E}_{V2} < \mathcal{E}_{V3} < \mathcal{E}_{V4}$

Fig.7

$\mathcal{E}_{V1} < \mathcal{E}_{V2} < \mathcal{E}_{V3} < \mathcal{E}_{V4}$

Fig. 8